Europäisches Patentamt

European Patent Office

Office européen des brevets

(19)

(11) Veröffentlichungsnummer: **0 272 371**
**B1**

(12) **EUROPÄISCHE PATENTSCHRIFT**

(45) Veröffentlichungstag der Patentschrift: 26.09.90

(51) Int. Cl.⁵: **B 23 K 3/02**

(21) Anmeldenummer: **87109836.4**

(22) Anmeldetag: **08.07.87**

(54) Verfahren zur Herstellung einer Dauerlötspitze.

(30) Priorität: **27.11.86 DE 3640493**

(43) Veröffentlichungstag der Anmeldung:
**29.06.88 Patentblatt 88/26**

(45) Bekanntmachung des Hinweises auf die
Patenterteilung:
**26.09.90 Patentblatt 90/39**

(84) Benannte Vertragsstaaten:
**AT BE CH DE FR GB IT LI LU NL**

(56) Entgegenhaltungen:
**DD-A- 235 208**
**DE-A- 3 204 949**

(73) Patentinhaber: **ERSA Ernst Sachs KG GmbH &
Co.
Leonhard-Karl-Strasse 24
D-6980 Wertheim / Main (DE)**

(72) Erfinder: **Gottschild, Wilfried, Dipl.-Ing.Dipl.-
Wirtsch.-Ing
Caspar-Merian-Strasse 19
D-6980 Wertheim/Main (DE)**
Erfinder: **Seifert, Guido
Weinweg 7
D-6981 Faulbach (DE)**

(74) Vertreter: **Gudel, Diether, Dr. et al
Patentanwälte Dr. V. Schmied-Kowarzik Dipl.-
Ing. G. Dannenberg Dr. P. Weinhold Dr. D. Gudel
Dipl.-Ing. S. Schubert Dr. P. Barz Grosse
Eschenheimer Strasse 39
D-6000 Frankfurt am Main 1 (DE)**

**Beschreibung**

Die Erfindung betrifft ein Verfahren zur Herstellung einer Dauerlötspitze, die aus einem Kern aus kupferhaltigem Material mit einem als Schutzschicht wirkenden Überzug besteht, ggf. mit wenigstens einem weiteren Überzug an der Außenfläche und/oder Innenfläche der Lötspitze.

Dauerlötspitzen haben bekanntlich einen als Schutzschicht wirkenden Überzug aus Eisen, der verhindert, daß das Kupfer des Kerns der Lötspitze mit dem Zinn des Lots eine Legierung bildet. Über der Kupferschicht befindet sich häufig eine Chromschicht, die bei Lagerung die Eisenbeschichtung vor Korrosion schützt und gleichzeitig das Annehmen von Weichlot an unerwünschten Stellen verhindert. (Vgl. "Elektrotechnik" 46, 258-261).

Bei einer innen hohl ausgebildeten Lötspitze wird die Innenfläche der Lötspitze häufig auch vernickelt.

Die übliche Herstellung derartiger bekannter Dauerlötspitzen ist sehr aufwendig. Die aus Elektrolytkupfer bestehenden Lötspitzen werden durch Einsatz galvanischer Verfahren mit unterschiedlichen Beschichtungen versehen. So wird der Eisenüberzug galvanisch auf dem Elektrolytkupfer abgeschieden. Dieser Eisenüberzug beträgt je nach Spitzenform 150 bis 300 µm, insbesondere an der Lötfläche.

Die Chromschicht wird anschließend ebenfalls galvanisch aufgebracht.

Die aktive Lötfläche wird durch galvanisches Abtragen der Chromschicht freigelegt.

Eine anschließende Vorverzinnung schützt wiederum die ansonsten freiliegende Eisenbeschichtung vor Oxidation.

Hohlspitzen werden in ihrem Inneren mit der chemisch aufgebrachten Nickelschicht versehen, um eine Oxidation der Kupferoberfläche zu unterbinden.

Ohne die zwingend erforderliche Schutzschicht würden die Lötspitzen, bedingt durch die ständige Wechselwärmebelastung sehr schnell auf dem Heizkörperträgerrohr des Lötkolbens festzundern.

Die zerspanende Herstellung der bekannten Lötspitze ist arbeitsaufwendig und führt zu verhältnismäßig viel Abfallmaterial. Dies gilt insbesondere für Hohlspitzen. Herstellungsbedingte Grate müssen durch Trovalieren entfernt werden. Die Veredelung erfolgt anschließend in galvanischen Bädern und dies ist ein lohnintensives und aufwendiges Verfahren. In den Eisenbädern betragen die Verweilzeiten mehrere Stunden. Je nach Lage und Position der Lötspitzen auf den Galvanikgestellen ergibt sich eine ungleiche Abscheidung des Eisens. An Kanten und Spitzen bestehen unvermeidbare wulstartige Ablagerungen von Eisen, die anschließend in Handarbeit einzeln entfernt werden müssen. So bedingt die beschriebene Herstellung bekannter Hohl-Dauerlötspitzen insgesamt 42 Arbeitsschritte und bei der Herstellung von Massiv-Dauerlötspitzen sind immer noch 38 Arbeitsschritte notwendig.

Zum Stand der Technik sei auch verwiesen auf einen Aufsatz in der Zeitschrif "VR Interpack" 1969, Seiten 600 bis 606, der die Herstellung von Weißblechdosen im Tiefziehverfahren beschreibt, sowie auf einen Aufsatz in der Zeitschrift "Blech", Nr. 1, 1967, Seiten 15 und 16, in dem die Herstellung von Lippenstifthülsen und dgl. Körpern, ebenfalls im Tiefziehverfahren, beschrieben wird.

Die Erfindung vermeidet die geschilderten Nachteile des bekannten Herstellungsverfahrens für Dauerlötspitzen. Ihr liegt die Aufgabe zugrunde, ein Verfahren vorzuschlagen, mit dem Dauerlötspitzen preisgünstig in guter Qualität hergestellt werden können, wobei man auch weitgehend von der Wahl der Materialien der verwendeten Überzüge frei sein soll.

Zur Lösung dieser Aufgabe ist die Erfindung dadurch gekennzeichnet, daß man, ausgehend von einer Platine aus einem Schichtverbundwerkstoff, der schichtenförmig übereinander das Kernmaterial sowie wenigstens einen der Überzüge enthält, ggf. auch die weiteren Überzüge, diesen durch Einwirkung einer mechanischen Kraft an einer Vielzahl von voneinander beabstandeten Stellen hülsenartig verformt, die dadurch hergestellten hülsenartigen Formlinge von der Platine abtrennt und schließlich durch spanloses Umformen dem hülsenartigen Formling die gewünschte Kontur verleiht.

Man verzichtet somit, wenn einmal die Platine aus dem Schichtverbundwerkstoff hergestellt ist, vollständig auf galvanische Überzugsverfahren und vermeidet daher die mit den Galvanikbädern einhergehende Umweltbelastung, lange Abscheidezeiten in den Galvanikbädern und die Vielzahl der hierbei notwendigen Arbeitsschritte. Stattdessen wird die Dauerlötspitze in dem gewünschten Schichtaufbau mit Hilfe rein mechanischer Bearbeitungsverfahren hergestellt, wie beschrieben. Das erfindungsgemäße Verfahren ist daher besonders einfach und kostengünstig. Die Strukturen der danach hergestellten Dauerlötspitze sind fühlbar verdichtet, weil sie mechanisch bearbeitet wurden. Dadurch ergeben sich abermals verlängerte Standzeiten. Aus dem hülsenartigen Formling können alle erforderlichen Formen hergestellt werden. Weiterhin ergibt sich ein wesentlich geringerer Materialeinsatz, verbunden mit weniger Abfall. Die Schichten liegen in definierten Dicken vor, weil dies bei der Herstellung der Platine aus dem Schichtverbundwerkstoff mit hoher Genauigkeit berücksichtigt und eingestellt werden kann. Die Innenbeschichtung, sofern sie vorhanden sein soll, geht ebenfalls einen sicheren Verbund mit den anderen Materialien ein. Es ergibt sich eine insgesamt gleichbleibende Wärmeleitfähigkeit, bedingt durch die erzielten konstanten Querschnitte. Auch die Umweltbelastung wird fühlbar verringert, weil keine galvanischen und zerspanenden Herstellungsverfahren mehr verwendet werden.

Die erwähnte Einwirkung der mechanischen Kraft, das Herstellen der Ausgangsplatine und auch das spanlose Umformen kann mit an sich bekannten Verfahren durchgeführt werden, wie dies in den Patentansprüchen 2 bis 4 näher aufgeführt ist.

Eine wichtige Ausgestaltung der Erfindung ist dadurch gekennzeichnet, daß die Lötspitze aus Schichtverbundwerkstoffen hergestellt wird, die eine Ausbildung der Lötspitze als Thermoelement ermöglichen. Hier macht man von der Eigenschaft des erfindungsgemäßen Verfahrens Gebrauch, daß man praktisch beliebige Ausgangsmaterialien für die Ausgangsplatine verwenden kann, weil man nicht mehr darauf Rücksicht nehmen muß, daß die Materialien in einem galvanischen Bad auf der betreffenden Schicht gut haftend abgeschieden werden müssen. Man kann daher die Ausgangsmaterialien derart wählen, daß sie unter Berücksichtigung der elektrochemischen Spannungsreihe ein Thermoelement (Meßfühler) ergeben. Hiermit sind die Vorteile verbunden, daß gleichzeitig eine optimale Temperaturerfassung an der Lötspitze möglich wird, verbunden mit einer hohen Ansprechgeschwindigkeit. Die Meßdaten werden gleichbleibend erfaßt, bedingt durch das Verschleißteil Lötspitze. Es ergibt sich also ein ständig erneuerter Temperatursensor.

Durch das erfindungsgemäße Verfahren kann auch auf Eisen als Schutzschicht verzichtet werden, weil das Eisen immer noch eine fühlbare Lösbarkeit in Zinn hat und diese Lösbarkeit bekanntlich nach einer gewissen Standzeit zu einer Lösung des Eisenüberzugs führt.

Eine weitere wichtige Ausgestaltung der Erfindung ist daher dadurch gekennzeichnet, daß für die Ausbildung der Schutzschicht ein Material verwendet wird, daß in Zinn gar nicht oder sehr gering lösbar ist. Als derartige Materialien können beispielsweise Molybdän, Wolfram oder Titan oder auch Legierungen oder Mischungen einiger oder aller dieser Metalle verwendet werden. Die erwähnten Metalle haben nämlich eine gegenüber Eisen fühlbar verringert Lösbarkeit in Zinn. Eine nach diesen Gesichtspunkten hergestellte Dauerlötspitze zeichnet sich somit durch eine abermals fühlbar erhöhte Standzeit aus, weil Schutzüberzüge aus diesen Materialien sich in Zinn praktisch nicht mehr lösen.

Die Erfindung wird im folgenden anhand eines Ausführungsbeispieles näher erläutert, aus dem sich weitere wichtige Merkmale ergeben. Es zeigt:

Fig. 1 - schematisch einen Schnitt durch eine Ausgangsplatine;

Fig. 2 - diese Ausgangsplatine in gegenüber Fig. 1 verkleinertem Maßstab, wobei aus der Platine mehrere hülsenartige Formlinge durch Tiefziehen hergestellt sind und einer dieser Formlinge bereits abgetrennt ist;

Fig. 3 - die mechanische Verformung dieses hülsenartigen Formlings zu einer Lötspitze;

Fig. 4 - eine Draufsicht auf die Platine nach dem Abtrennen der hülsenartigen Formlinge.

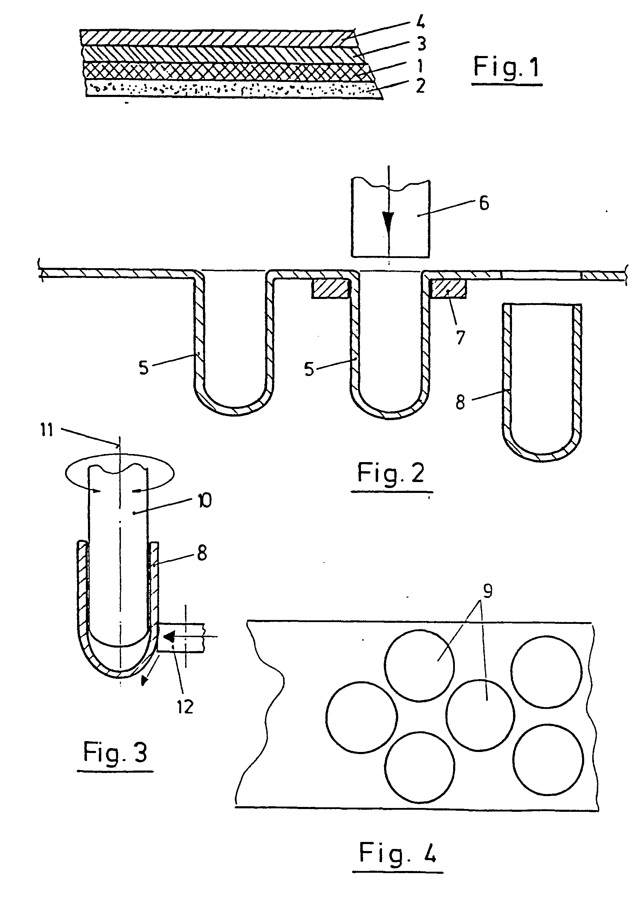

Fig. 1 zeigt als Beispiel einen vergrößerten Schnitt durch eine Ausgangsplatine oder Ausgangsronde, die als Schichtverbundwerkstoff aufgebaut ist. Diese platine besteht aus übereinander befindlichen Schichten, beispielsweise aus einer Kupferschicht 1, unter der sich eine Nickelschicht 2 befindet und über der sich eine Eisenschicht 3 befindet, die als Schutzschicht dient. Über der Eisenschicht kann sich wiederum eine Chromschicht 4 befinden.

Dieser Schichtverbundwerkstoff wird mechanisch bearbeitet, beispielsweise im Tiefziehverfahren, so daß daraus an einer Vielzahl von möglichst eng nebeneinander befindlichen Stellen hülsenartige Formlinge 5 hergestellt werden. In Fig. 2 ist auch angedeutet, wie die Formlinge mit Hilfe eines Oberstempels 6 und eines ringförmigen Unterstempels 7 abgetrennt werden, so daß ein becherförmiges Gebilde 8 entsteht.

Fig. 4 zeigt schematisch die Anordnung der Formlinge 5 bzw. der nach dem Abtrennen der Formlinge in der Ausgangsplatine entstehenden Löcher 9 in der Platine, die möglichst eng voneinander beabstandet sind.

Fig. 3 zeigt als Beispiel der nachfolgenden mechanischen Bearbeitung, wie das becherförmige Gebilde 8 auf einen Dorn 10 aufgespannt wird, der um seine Achse 11 gedreht wird. Am Außenumfang des Gebildes 8 liegt eine Andrückrolle 12 an, die die notwendige Verformung zur endgültigen Kontur der Dauerlötspitze bewirkt.

Insbesondere Fig. 2 zeigt, daß das Gebilde 8 die Form eines Bechers hat, d.h. im wesentlichen zylindrische Seitenwände, die in einem gemeinsamen, abgerundeten Boden übergehen. Der Boden ist aber nicht unbedingt notwendig, so daß in diesem Stadium auch hülsenförmige Formlinge, die dann keinen Boden hätten, hergestellt werden können.

**Patentansprüche**

1. Verfahren zur Herstellung einer Dauerlötspitze, die aus einem Kern aus kupferhaltigem Material mit einem als Schutzschicht wirkenden Überzug besteht, ggf. mit wenigstens einem weiteren Überzug an der Außenfläche und/oder Innenfläche der Lötspitze, dadurch gekennzeichnet, daß man, ausgehend von einer Platine aus einem Schichtverbundwerkstoff (1-4), der schichtenförmig übereinander das Kernmaterial (1) sowie wenigstens einen der Überzüge (2, 3, 4) enthält, ggf. auch die weiteren Überzüge, diesen durch Einwirkung einer mechanischen Kraft an einer Vielzahl von voneinander beabstandeten Stellen hülsen- oder becherförmig verformt, die dadurch hergestellten hülsen- oder becherförmigen Formlinge (5) von der Platine abtrennt und schließlich durch spanloses Umformen dem hülsen- oder becherförmigen Formling (8) die gewünschte Kontur verleiht.

2. Verfahren nach Anspruch 1, dadurch gekennzeichnet, daß die Einwirkung der mechanischen Kraft durch Tiefziehen, Drücken oder Pressen erfolgt.

3. Verfahren nach Anspruch 1 oder 2, dadurch gekennzeichnet, daß die Ausgangsplatine durch Preßschweißen, Walz plattieren oder Sprengplattieren hergestellt wird.

4. Verfahren nach einem der Ansprüche 1 bis 3, dadurch gekennzeichnet, daß das spanlose Umformen durch Fließpressen oder Hämmern erfolgt.

5. Verfahren nach einem der Ansprüche 1 bis 4, dadurch gekennzeichnet, daß die Lötspitze aus Schichtverbundwerkstoffen hergestellt wird, die eine Ausbildung der Lötspitze als Thermoelement ermöglichen.

6. Verfahren nach einem der Ansprüche 1 bis 5, dadurch gekennzeichnet, daß für die Ausbildung der Schutzschicht (3) ein Material verwendet wird, daß in Zinn gar nicht oder nur sehr gering lösbar ist.

7. Verfahren nach Anspruch 6, dadurch gekennzeichnet, daß die Schutzschicht (3) aus Molybdän, Wolfram oder Titan oder aus Legierungen oder Mischungen einiger oder aller dieser Metalle hergestellt wird.

## Revendications

1. Procédé de fabrication d'une buse de chalumeau durable, qui se compose d'un noyau en matière contenant du cuivre comportant un revêtement agissant comme couche de protection, comportant aussi éventuellement un autre revêtement sur la surface extérieure et/ou la surface intérieure de la buse de chalumeau, caractérisé en ce que, en partant d'une platine d'un matériau composite en couches (1 à 4) qui contient sous forme de couches superposées la matière de noyau (1) ainsi qu'au moins l'un des revêtements (2, 3, 4), et éventuellement les autres revêtements, l'on déforme celle-ci, en forme de douilles ou de godets, par action d'une force mécanique sur une pluralité d'emplacements espacés les uns des autres, l'on sépare de la platine les ébauches (5) en forme de douilles ou de godets, et que l'on communique finalement, à l'ébauche en forme de douille ou de godet, le contour souhaité par une déformation sans enlèvement de copeaux.

2. Procédé selon la revendication 1, caractérisé en ce que l'action de la force mécanique résulte d'un étirage profond, d'un emboutissage ou d'un travail à la presse.

3. Procédé selon la revendication 1 ou 2, caractérisè en ce que la platine de départ est réalisée par soudure à la presse, placage au laminoir ou placage par explosion.

4. Procédé selon l'une des revendications 1 à 3, caractérisé en ce que la déformation sans enlèvement de copeaux s'effectue par compression en fluage ou par martelage.

5. Procédé selon l'une des revendications 1 à 4, caractérisé en ce que la buse de chalumeau est constituée de matériaux composites en couches qui permettent une réalisation de la buse de chalumeau comme thermoélément.

6. Procédé selon l'une des revendications 1 à 5, caractérisé en ce que, pour constituer la couche de protection 3, il est utilisé une matière qui n'est pas soluble dans l'étain ou ne l'est que faiblement.

7. Procédé selon la revendication 6, caractérisé en ce que la couche de protection est constituée de molybdène, de tungstène, de titane, ou d'alliages ou de mélanges de quelques-uns de ces métaux ou de tous ceux-ci.

## Claims

1. Process for the manufacture of a permanent soldering tip consisting of a core of coppery material with a coating functioning as protective layer, possibly with at least one further coating at the outer surface and/or inner surface of the soldering tip, characterized in that starting from a semi-finished flat of a laminated sheet material (1-4) which is containing stratified superposing the core material (1) as well as at least one of the coatings (2, 3, 4), possibly also the further coatings, said laminated sheet material is deformed socket-like or cup-like by the influence of mecanical force at a plurality of spots spaced from each other, separating the thereby produced socket-like or cup-like blanks (5) from the sheet flat, and finally by non-cutting deforming rendering the blank (8) the desired contour.

2. Process according to claim 1, characterized in that the influence of the mechanical force is effected by by deepdrawing, pushing or pressing.

3. Process according to claim 1 or 2, characterized in that the starting flat is produced by press welding, roll plating or burst plating.

4. Process according to one of claims 1 to 3, characterized in that the non-cutting deforming is effected by extrusion molding or hammering.

5. Process according to one of claims 1 to 4, characterized in that the soldering tip is produced from laminated sheet material which enables the provision of the soldering tip as thermo element.

6. Process according to one of claims 1 to 5, characterized in that for providing the protective layer (3) a material is utilized which is not soluble in tin at all or only very little.

7. Process according to claim 6, characterized in that the protective layer (3) is produced from molybdenum tungsten or titanium or from alloys or mixtures of some or all of these metals.

Fig. 1

Fig. 2

Fig. 3

Fig. 4